(19) Europäisches Patentamt

European Patent Office

Office européen des brevets

(11) Veröffentlichungsnummer: **0 218 026 B1**

(12) **EUROPÄISCHE PATENTSCHRIFT**

(45) Veröffentlichungstag der Patentschrift: **15.01.92**

(21) Anmeldenummer: **86109937.2**

(22) Anmeldetag: **19.07.86**

(51) Int. Cl.⁵: **C04B 35/48**

(54) **Verfahren zur Herstellung von Formkörpern aus AL2O3 und Zr02 sowie nach dem Verfahren hergestellte Formkörper.**

(30) Priorität: **11.10.85 DE 3536407**

(43) Veröffentlichungstag der Anmeldung:
**15.04.87 Patentblatt  87/16**

(45) Bekanntmachung des Hinweises auf die
Patenterteilung:
**15.01.92 Patentblatt  92/03**

(84) Benannte Vertragsstaaten:
**AT BE CH DE FR GB IT LI LU NL SE**

(56) Entgegenhaltungen:
**EP-A- 0 140 638**
**DE-A- 2 810 134**
**FR-A- 2 457 267**
**GB-A- 2 094 779**

(73) Patentinhaber: **DIDIER-WERKE AG**
**Lessingstrasse 16-18**
**W-6200 Wiesbaden(DE)**

(72) Erfinder: **Elstner, Ingo, Dr.**
**Augustastrasse 2B**
**W-6200 Wiesbaden(DE)**
Erfinder: **Leistner, Hans, Dr.**
**Am Hermannsberg 9**
**W-6200 Wiesbaden(DE)**

(74) Vertreter: **Brückner, Raimund, Dipl.-Ing.**
**c/o Didier-Werke AG Lessingstrasse 16-18**
**W-6200 Wiesbaden(DE)**

**Beschreibung**

Die Erfindung betrifft ein Verfahren zur Herstellung von Formkörpern aus Mischungen der Ausgangsstoffe $Al_2O_3$ und $ZrO_2$, in der Zusammensetzung von 60 bis 40 Gew.-% $Al_2O_3$ und 40 bis 60 Gew.-% $ZrO_2$, wobei das Ausgangsgemisch verformt und gebrannt wird.

Aus Stahl und Eisen, 100, (1980), Seiten 1457 - 1462 sind bereits Formkörper aus 50% $Al_2O_3$ und 50% $ZrO_2$ bekannt, welche als Pfannenschieberverschlüsse eingesetzt wurden. Hierbei handelt es sich jedoch um einen Formkörper mit hoher Dichte, bei welchem durch das feste, durch $Al_2O_3$ gebildete "Gerüst" jede Volumenänderung der $ZrO_2$-Kristallite unterdrückt und auch die Modifikationsänderung von $ZrO_2$ beim Gebrauch bei etwa 1000 ° C gehemmt wird.

Nach der EP-A-140638 sind gesinterte Körper von der Art des Zirkonoxids mit Yttriumoxid von 2-50% Aluminiumoxid bekannt. Ausgehend von einem feinkörnigen Pulver von wenigen $\mu$m Korngröße, mittlere Korngröße nicht mehr als 0,5 $\mu$m (Seite 8, Zeile 7), wird durch Sintern unter Druck ein Körper mit sehr hoher Dichte und hoher Biegefestigkeit erreicht, der neben tetragonalem $ZrO_2$ auch kubisches $ZrO_2$ aufweist.

Aufgabe der vorliegenden Erfindung ist die Bereitstellung eines Verfahrens zur Herstellung von Formkörpern der zuvor genannten Art, bei welchem Formkörper erhalten werden, die eine sehr gute Temperaturwechselbeständigkeit, TWB, bei gleichzeitiger hoher Festigkeit besitzen, wobei die bei der Herstellung erzielte Phasenumwandlung zur Elastizitätssteigerung ausgenutzt wird.

Zur Lösung dieser Aufgabe dient das Verfahren, das dadurch gekennzeichnet ist, daß:
die Ausgangsstoffe in der Korngröße unter 90$\mu$m und bis zu 30% unter 3$\mu$m miteinander vermischt werden,
die Formkörper bei Temperaturen von 1400 ° C bis 1800 ° C gebrannt werden, und
die Abkühlung nach dem Brand mit maximal 150 °C/H durchgeführt wird, sodaß das $ZrO_2$ vollständig oder fast vollständig in die monokline Phase übergeht.

Bevorzugte Ausführungsform der Verfahrens sind in den Ansprüchen 2 bis 6 näher beschrieben.

Die Erfindung betrifft ferner nach dem Verfahren hergestellte Formkörper, welche die zuvor genannten, guten Eigenschaften einer hohen TWB, einer hohen mechanischen Festigkeit und relativ hohen Elastizität aufweisen, und die ferner auch bei Temperaturen oberhalb des Transformationspunktes von $ZrO_2$, welcher bei 900 ° C bzw. 1100 ° C liegt, ohne Beeinträchtigung wegen ihrer guten TWB-Werte eingesetzt werden können.

Es wird angenommen, daß durch das erfindungsgemäße Verfahren einerseits ein $Al_2O_3$-Gerüst gebildet wird, bei welchem die primären $Al_2O_3$-Körner sehr ausgeprägt über Ecken, Kanten und Flächen miteinander versintert, d.h. sammelkristallisiert, sind, und andererseits ein $ZrO_2$-Gerüst gebildet wird, welches aus den einzelnen, ursprünglich vorhandenen $ZrO_2$-Körnern gebildet wird, die überwiegend nur über Ecken und Kanten miteinander versintert sind, wobei ein Teil der $ZrO_2$-Körner jedoch auch als Einzelkörner vorliegt.

Bei dem erfindungsgemäßen Verfahren ist es wesentlich, daß die Ausgangsstoffe $Al_2O_3$ und $ZrO_2$ als Materialien mit einer chemischen Reinheit von wenigstens 99 % eingesetzt werden. Als $Al_2O_3$-Material wird vorteilhafterweise Sinterkorund oder Tabulartonerde verwendet.

Ebenso sollte des gegebenenfalls als Stabilisator eingesetzte Yttriumoxid keine wesentlichen Mengen an Verunreinigungen wie MgO, CaO und/oder $SiO_2$ enthalten. Durch Mengen von mehr als 1 Gew.-%, bezogen auf die Gesamtmischungsbestandteile, an solchen Verunreinigungen tritt - unabhängig vom Vorliegen der Verunreinigungen in bestimmten Ausgangsstoffen - eine Reaktion mit $Al_2O_3$ zu Spinellen, Calciumaluminaten oder Aluminiumsilikaten auf.

Der Bestandteil Yttriumoxid, $Y_2O_3$, führt zu einem verminderten, d. h. nur fast vollständigen Übergang des $ZrO_2$ beim Abkühlen in die monokline Phase.

Die Korngröße der Ausgangsstoffe ist bei dem erfindungsgemäßen Verfahren ebenfalls wesentlich. Vor dem Herstellen der Formkörper durch Formpreßen oder Gießen des Schlickers muß die maximale Korngröße auf 90$\mu$m herabgesetzt werden, dies gilt auch im Falle einer eventuellen Mitverwendung von Yttriumoxid.

Falls die Ausgangsstoffe nicht bereits eine geeignete maximale Korngröße aufweisen, muß daher eine Feinzerkleinerung, d. h. eine Feinmahlung, üblicherweise in einer Kugelmühle als Trockenmahlung oder Naßmahlung durchgeführt werden.

Falls die Ausgangsstoffe bereits die gewünschte maximale Korngröße besitzen, ist jedoch ein inniges Vermischen, d. h. eine Homogenisierung der Ausgangsstoffe erforderlich. Dies wird vorteilhafterweise ebenfalls in einer Kugelmühle erreicht, wobei eine eventuelle weitere Herabsetzung der Korngröße unschädlich, oft sogar vorteilhaft ist.

Die beiden Hauptausgangsstoffe, $Al_2O_3$ und $ZrO_2$, und ebenso das eventuell vorliegende $Y_2O_3$ müssen nicht dieselbe Korngröße bzw. Korngrößenverteilung aufweisen. Besonders bevorzugt sind Ausgangsmi-

schungen, bei denen das $ZrO_2$ eine möglichst geringe maximale Korngröße besitzt, insbesondere maximal 25 $\mu$m. So kann ein Gemisch verwendet werden, bei dem das $Al_2O_3$ unterhalb 90 $\mu$m liegt, und das $ZrO_2$ maximal 25 $\mu$m hat, wobei bis zu 30 % dieses $ZrO_2$ vorteilhafterweise unter 3 $\mu$m liegen.

Nach Fertigstellung der Ausgangsmischung, d. h. nachdem die eingesetzten Ausgangsstoffe die gewünschte, maximale Korngröße aufweisen, wird diese entweder granuliert oder direkt zu einem Gießschlicker weiterverarbeitet. Das Granulieren der fertigen Ausgangsmischung erfolgt in an sich bekannter Weise durch Zusatz geringer, oder im Fall einer Sprühgasgranulierung durch Zusatz größerer Mengen an Flüssigkeit, insbesondere von Wasser, und gegebenenfalls unter Zusatz von Bindemitteln, bevorzugt organischen Bindemitteln, die beim späteren Brennvorgang ohne Rückstandsbildung verbrennen. Das hierbei erhaltene Granulat kann direkt bei einer Preßverformung eingesetzt werden.

Die Weiterverarbeitung der fertigen Ausgangsmischung zu einem Gießschlicker erfolgt ebenfalls in an sich bekannter Weise entweder durch Zugabe der erforderlichen Wassermenge oder Eingabe des Mehles der Ausgangsmischung in das Wasser in einer geeigneten Rührvorrichtung oder einer Kugelmühle. Vorteilhafterweise kann hierbei ebenfalls ein Bindemittel, bevorzugt ein organisches Bindemittel wie Stärke oder ein Celluloseether wie Methylcellulose oder Carboxymethylcellulose, verwendet werden. Der Schlicker wird dann in an sich bekannter Weise zur Formkörpern durch Gießen in geeigneten Formen weiterverarbeitet.

Die erhaltenen Formkörper werden dann bei Temperaturen oberhalb 100° C, vorteilhafterweise bei 110° C bis 180° C, getrocknet, damit beim nachfolgendne Brand durch eventuell zurückgebliebenes Wasser keine Rißbildung auftreten kann.

Das Brennen der getrockneten Formkörper erfolgt in an sich bekannter Weise in beliebigen, geeigneten Öfen bei Temperaturen zwischen 1400° C und 1800° C. Die Brenndauer in diesem Temperaturbereich hängt von der Größe der Formkörper ab, üblicherweise liegt sie jedoch im Bereich von 1 h bis 12 h.

Nach dem Brennen muß die Abkühlung von der Brenntemperatur ausreichend langsam erfolgen, damit die Umwandlung des bei hoher Temperatur mit tetragonaler Phase vorliegenden $ZrO_2$ in die monokline Phase vollständig oder weitgehend vollständig ablaufen kann. Als geeignet hat sich eine Abkühlgeschwindigkeit von maximal 150° C/h herausgestellt, wobei ein unterer Grenzwert für die Abkühlgeschwindigkeit bei etwa 30° C/h liegt.

Bei der Aufarbeitung der Ausgangsstoffe $Al_2O_3$ und $ZrO_2$ hat es sich als vorteilhaft herausgestellt, wenn zunächst eine Mischung hiervon hergestellt wird und diese dann bei Temperaturen zwischen 1000° C und 1500° C vorgebrannt wird. Hierbei erfolgt beim $ZrO_2$ die Phasenänderung von monoklin zu tetragonal bzw. umgekehrt, die mit jeweils einer Volumenänderung verbunden ist, so daß bei nachfolgenden Mahlvorgang eine besonders gute Homogenisierung der Mischung erreicht wird.

Die Erfindung wird anhand der folgenden Beispiele näher erläutert:

Beispiel 1

100 Gew.-Teile Sinterkorund mit einer Reinheit von 99,2 % und einer Ausgangskorngröße von maximal 250 $\mu$m sowie 100 Gew.-Teile $ZrO_2$ mit einer Reinheit von 99,1 % und einer maximalen Korngröße von 150 $\mu$m wurden trocken miteinander vermischt und zunächst bei 1200° C während 1 Stunde in einem Ofen in einem Tiegel vorgebrannt. Anschließend wurde der Tiegelinhalt in eine Kugelmühle überführt und 6 Stunden gemahlen. Es wurde gefunden, daß die maximale Korngröße unter 60 $\mu$m lag. Dies so erhaltene Mehl der Ausgangsstoffe wurde dann unter Zusatz einer geringen Wassermenge granuliert und aus dem Granulat wurde ein Formkörper durch Fressen in eine Form hergestellt, dieser Formkörper wurde 2 Stunden bei 120° C getrocknet und dann während
6 Stunden bei 1700° C gebrannt. Anschließend wurde mit einer Geschwindigkeit von 60° C/h abgekühlt. Der Formkörper besaß die Abmessungen von 250 x 125 x 65 mm.
Der Formkörper besaß die folgenden Eigenschaften:

| | |
|---|---|
| Dichte (g/cm$^3$) | 4,72 |
| Rohdichte (g/cm$^3$) | 4,42 |
| Gesamtporosität (%) | 6,4 |
| offene Porosität (%) | 3,6 |
| Biegefestigkeit (MPa) | 127 |
| E-Modul (statisch) (GPa) | 135 |

Beispiel 2

120 Gew.-Teile Tabulartonerde mit einer Reinheit von 99,8 % und 80 Gew.-Teile yttriumoxidstabilisiertes $ZrO_2$ mit einem Gehalt an $Y_2O_3$ von 3 Gew.-% und weniger als 0,5 Gew.-% anderen Verunreinigungen wurden in einer Kugelmühle unter Zusatz von Wasser während 16 h naßgemahlen, wobei eine maximale Korngröße von 25 $\mu$m erreicht wurde und etwa 25 % hiervon eine Korngröße unter 3 $\mu$m besaßen. Das naße Mahlgut wurde mit 0,8 Gew.-% Stärke, bezogen auf die Feststoffe, versetzt, ferner wurde noch weiteres Wasser zugegeben, um einen Schlicker geeigneter Konsistenz zu erhalten. Dieser Schlicker wurde dann in eine geeignete Form eingegossen und nach dem Anziehen und Erreichen der gewünschten Wandstärke und dem Außgießen des restlichen Schlickers wurde der gebildete, hohlzylindrische Formkörper von 50 mm Außendurchmesser und einer Wandstärke von 5 mm nach einem Vortrocknen in der Form aus dieser entnommen, zunächst an der Luft für 48 Stunden und dann bei 110° C für weitere 8 Stunden getrocknet. Anschließend wurde der getrocknete Formkörper bei 1550° C für 6 Stunden gebrannt und dann mit einer Abkühlgeschwindigkeit von 120° C abgekühlt.

Der erhaltene Formkörper besaß die folgenden Eigenschaften:

| | |
|---|---|
| Dichte (g/cm$^3$) | 4,58 |
| Rohdichte (g/cm$^3$) | 4,16 |
| Gesamtporosität (%) | 9,2 |
| offene Porosität (%) | 6,1 |
| Biegefestigkeit (MPa) | 150 |
| E-Modul (statisch) (GPa) | 190 |

**Patentansprüche**

1. Verfahren zur Herstellung von Formkörpern aus Mischungen der Ausgangsstoffe $Al_2O_3$ und $ZrO_2$, in der Zusammensetzung von 60 bis 40 Gew.-% $Al_2O_3$ und 40 bis 60 Gew.-% $ZrO_2$, wobei das Ausgangsgemisch verformt und gebrannt wird,
dadurch gekennzeichnet,
daß die Ausgangsstoffe in der Korngröße unter 90 $\mu$m und bis zu 30 % unter 3 $\mu$m miteinander vermischt werden,
die Formkörper bei Temperaturen von 1400° C bis 1800° C gebrannt werden, und die Abkühlung nach dem Brand mit maximal 150° C/h so langsam durchgeführt wird, daß $ZrO_2$ vollständig oder fast vollständig in die monokline Phase übergeht.

2. Verfahren nach Anspruch 1,
dadurch gekennzeichnet,
daß dem Ausgangsgemisch als weiterer Bestandteil bis zu 4 Gew.-Teile Yttriumoxid, $Y_2O_3$, bezogen auf 100 Gew.-Teile $Al_2O_3$ und $ZrO_2$ als Stabilisator zugesetzt wird.

3. Verfahren nach einem der Ansprüche 1 bis 2,
dadurch gekennzeichnet,
daß die Ausgangsstoffe in der Korngröße unter 40 $\mu$m verwendet werden.

4. Verfahren nach Anspruch 3,
dadurch gekennzeichnet,
daß die Ausgangsstoffe in der Korngröße unter 25 $\mu$m verwendet werden.

5. Verfahren nach einem der Ansprüche 1 bis 4,
dadurch gekennzeichnet,
daß die Mischung der Ausgangsstoffe zunächst einem Vorbrand bei 1000° C bis 1500° C unterzogen wird und dann die Feinmahlung oder eine weitere Feinmahlung bis zur gewünschten maximalen Korngröße durchgeführt wird.

6. Formkörper, hergestellt nach dem Verfahren nach einem der Ansprüche 1 bis 5.

**Claims**

1. Method of producing shaped bodies from mixtures of $Al_2O_3$ and $ZrO_2$ as starting materials in the composition of 60 to 40 wt.% $Al_2O_3$ and 40 to 60 wt.% $ZrO_2$, whereby the starting mixture is shaped and fired, characterised in that the starting materials are mixed together in a grain size of less than 90 $\mu$m and up to 30% less than 3 $\mu$m, the shaped bodies are fired at temperatures of $1440^\circ$C to $1800^\circ$C and after the firing the cooling is performed so slowly at a maximum of $150^\circ$C/h that $ZrO_2$ changes completely or substantially completely into the monoclinic phase.

2. Method as claimed in claim 1, characterised in that as a further component up to 4 parts by wt. yttrium oxide, $Y_2O_3$, with respect of 100 parts by wt. $Al_2O_3$ and $ZrO_2$, are added to the starting mixture as a stabiliser.

3. Method as claimed in one of claims 1 to 2, characterised in that the starting materials are used in a grain size of less than 40 $\mu$m.

4. Method as claimed in claim 3, characterised in that the starting materials are used in a grain size of less than 25 $\mu$m.

5. Method as claimed in one of claims 1 to 4, characterised in that the mixture of the starting materials is firstly subjected to a prefiring at $1000^\circ$C to $1500^\circ$C and then the fine milling or a further fine milling to the desired maximum grain size is effected.

6. Moulded body produced in accordance with the method as claimed in one of claims 1 to 5.

**Revendications**

1. Procédé de fabrication de corps moulés formés de mélanges des produits de départ $Al_2O_3$ et $ZrO_2$, composés de 60 à 40 % en poids de $Al_2O_3$ et 40 à 60 % de $ZrO_2$, dans lequel le mélange de départ est façonné et calciné, caractérisé en ce qu'on mélange les produits de départ d'une grosseur de grains inférieure à 90 $\mu$m et jusqu'à 30 % inférieure à 3 $\mu$m, on calcine les corps moulés à des températures comprises entre 1400 et $1800^\circ$C, et on réalise le refroidissement après la calcination, à une vitesse maximale de $150^\circ$C/h, jusqu'à ce que le $ZrO_2$ se transforme complètement ou presque complètement en phase monoclinique.

2. Procédé selon la revendication 1, caractérisé en ce qu'on ajoute au mélange de départ, comme composant supplémentaire, jusqu'à 4 parties en poids d'oxyde d'yttrium, $Y_2O_3$, par 100 parties en poids de $Al_2O_3$ et de $ZrO_2$, comme stabilisant.

3. Procédé selon la revendication 1 ou 2, caractérisé en ce qu'on utilise les produits de départ avec une grosseur de grains inférieure à 40 $\mu$m.

4. Procédé selon la revendication 3, caractérisé en ce qu'on utilise les produits de départ avec une grosseur de grains inférieure à 25 $\mu$m.

5. Procédé selon l'une quelconque des revendications 1 à 4, caractérisé en ce qu'on soumet le mélange des produits de départ d'abord à une pré-calcination à une température comprise entre 1.000 et $1.500^\circ$C, et ensuite on réalise le broyage fin ou un broyage fin complémentaire jusqu'à obtention de la grosseur de grains maximale souhaitée.

6. Corps moulés fabriqués d'après le procédé selon l'une des revendications 1 à 5.